## Europäisches Patentamt

## European Patent Office

## Office européen des brevets

(19)

(11) **EP 1 201 896 B1**

(12) **EUROPÄISCHE PATENTSCHRIFT**

(45) Veröffentlichungstag und Bekanntmachung des Hinweises auf die Patenterteilung:
**09.11.2005 Patentblatt 2005/45**

(51) Int Cl.⁷: **F02D 41/06**, F02D 41/40

(21) Anmeldenummer: **01123642.9**

(22) Anmeldetag: **02.10.2001**

(54) **Verfahren zum Starten einer Brennkraftmaschine**

Method for starting an internal combustion engine

Méthode pour démarrer un moteur à combustion interne

(84) Benannte Vertragsstaaten:
**DE ES FR IT**

(30) Priorität: **26.10.2000 DE 10053091**

(43) Veröffentlichungstag der Anmeldung:
**02.05.2002 Patentblatt 2002/18**

(73) Patentinhaber: **ROBERT BOSCH GMBH**
**70442 Stuttgart (DE)**

(72) Erfinder:
• **Joos, Klaus**
**74399 Walheim (DE)**

• **Frenz, Thomas**
**86720 Noerdlingen (DE)**
• **Grass, Gerd**
**71701 Schwieberdingen (DE)**
• **Bochum, Hansjoerg**
**Novi, MI 48377 (US)**

(56) Entgegenhaltungen:
**DE-A- 10 012 024     DE-A- 19 726 756**
**DE-A- 19 726 757     US-A- 5 970 955**

**Beschreibung**

Stand der Technik

Die Erfindung geht aus von einem Verfahren zum Starten einer Brennkraftmaschine insbesondere eines Kraftfahrzeugs nach dem Oberbegriff des Anspruchs 1. Die Erfindung betrifft ebenfalls ein entsprechendes Steuergerät für eine derartige Brennkraftmaschine, ein entsprechendes elektrisches Speichermedium sowie ein entsprechendes Computerprogramm.

Ein derartiges Verfahren ist beispielsweise aus der DE 197 26 757 A bekannt. Als weiterer Stand der Technik wird die DE 197 26 756 A genannt.

Bei einer sogenannten Benzin-Direkteinspritzung wird der Kraftstoff direkt während der Ansaugphase oder während der Verdichtungsphase über Einspritzventile in den Brennraum der Brennkraftmaschine eingespritzt und dort verbrannt. Die einzuspritzende Kraftstoffmasse wird vorab aus Betriebsgrößen der Brennkraftmaschine ermittelt und in eine zugehörige Einspritzdauer umgerechnet. In einem Normalbetrieb der Brennkraftmaschine, also beispielsweise im Leerlaufbetrieb, erfolgt diese Umrechung in Abhängigkeit von einem Druckmittelwert, der aus über mehrere Einspritzungen aufeinander folgend gemessenen Drücken in einem den Einspritzventilen vorgelagerten Kraftstoffspeicher berechnet wird. Bei diesem Druck in dem Kraftstoffspeicher handelt es sich um denjenigen Druck, der auf den Kraftstoff einwirkt, und mit dem damit der Kraftstoff über die Einspritzventile in den Brennraum der Brennkraftmaschine eingespritzt wird.

Beim Starten der Brennkraftmaschine muss insbesondere bei nicht-betriebswarmer Brennkraftmaschine eine erhöhte Kraftstoffmenge in den Brennraum eingespritzt werden. Dies hat zur Folge, dass sich der Druck in dem Kraftstoffspeicher wesentlich vermindern kann. Dieser Druckeinbruch wird noch dadurch verstärkt, dass beim Starten der Brennkraftmaschine der Druck im Kraftstoffspeicher gegebenenfalls noch nicht ausreichend vorhanden ist und auch nicht so schnell aufgebaut und aufrecht erhalten werden kann.

Wird somit beim Starten der Brennkraftmaschine die einzuspritzende Kraftstoffmasse in Abhängigkeit von dem vorgenannten Druckmittelwert im Kraftstoffspeicher in die zugehörige Einspritzdauer umgerechnet, so führt dies zu einem Fehler. Aufgrund des Druckeinbruchs im Kraftstoffspeicher ist der genannte Druckmittelwert letztlich zu groß, so dass die Umrechnung eine zu kurze Einspritzdauer zur Folge hat. Damit wird zu wenig Kraftstoff in den Brennraum eingespritzt, was zu Aussetzern oder gar zu einem Absterben der Brennkraftmaschine führen kann.

Aufgabe und Vorteile der Erfindung

Aufgabe der Erfindung ist es, ein Verfahren zum Starten einer Brennkraftmaschine zu schaffen, mit dem eine korrekte Ermittlung der Einspritzdauer und damit ein sicherer Startvorgang erreichbar ist.

Diese Aufgabe wird bei einem Verfahren der eingangs genannten Art erfindungsgemäß durch die Merkmale des kennzeichnenden Teils des Anspruchs 1 gelöst. Bei einem Steuergerät, einem elektrischen Speichermedium und einem Computerprogramm der eingangs genannten Art wird die Aufgabe erfindungsgemäß entsprechend gelöst.

Erfindungsgemäß wird also der am Ende oder nach der Einspritzung vorhandene Druck aus dem vor oder am Anfang der Einspritzung vorhandenen Druck berechnet. Diese Berechnung kann somit vor oder während der Einspritzung durchgeführt werden. Damit kann erfindungsgemäß auch die Einspritzdauer während der Einspritzung ermittelt werden.

Durch diese, auf die Einspritzung bezogene Berechnung der Einspritzdauer ist es möglich, den Druckeinbruch bei jeder einzelnen Einspritzung individuell zu berücksichtigen. Durch die Berücksichtigung der Drücke vor und nach der jeweiligen Einspritzung ist es möglich, den jeweils vorhandenen Druckeinbruch zu erkennen und bei der Umrechung der Kraftstoffmasse in die Einspritzdauer genau zu berücksichtigen.

Es wird also nicht ein Druckmittelwert verwendet, der über mehrere Einspritzungen hinweg gewonnen wird, sondern es werden nur die beiden Drücke verwertet, die etwa vor und etwa nach der betreffenden Einspritzung vorhanden sind. Es wird also nicht über mehrere Einspritzungen gemittelt, sondern es wird gezielt nur die betreffende Einspritzung für die Berechnung der zugehörigen Einspritzdauer betrachtet.

Die Berechnung der Einspritzdauer wird somit wesentlich genauer, was einen schnellen und sicheren Startvorgang mit einem geringen Kraftstoffverbrauch und geringen Schadstoffemissionen zur Folge hat.

Bei einer vorteilhaften Ausgestaltung der Erfindung wird aus dem vor oder am Anfang der Einspritzung auf den Kraftstoff einwirkenden Druck eine vor der Einspritzung in dem Kraftstoffspeicher vorhandene Kraftstoffmasse ermittelt. Dies wird auf der Grundlage einer Gleichung durchgeführt, die die Kompressibilität des Kraftstoffs berücksichtigt.

Bei einer weiteren vorteilhaften Ausgestaltung der Erfindung wird aus der vor der Einspritzung in dem Kraftstoffspeicher vorhandenen Kraftstoffmasse und aus der einzuspritzenden Kraftstoffmasse eine nach der Einspritzung in dem Kraftstoffspeicher vorhandene Kraftstoffmasse ermittelt. Dies wird mittels einer Differenzbildung durchgeführt.

Danach wird aus der nach der Einspritzung in dem Kraftstoffspeicher vorhandenen Kraftstoffmasse der am Ende oder nach der Einspritzung auf den Kraftstoff einwirkende Druck ermittelt. Dies wird wiederum mit Hilfe der vorgenannten Gleichung durchgeführt.

Besonders vorteilhaft ist es, wenn aus dem vor oder am Anfang der Einspritzung auf den Kraftstoff einwirkenden Druck und aus dem am Ende oder nach der Einspritzung auf den Kraftstoff einwirkenden Druck ein Druckmittelwert ermittelt wird. Dieser auf die jeweilige Einspritzung bezogene Druckmittelwert ermöglicht es, den bei der betreffenden Einspritzung auftretenden Druckeinbruch in ausreichendem Umfang zu berücksichtigen, ohne einen zu großen Rechenaufwand zu erfordern.

Von besonderer Bedeutung ist die Realisierung des erfindungsgemäßen Verfahrens in der Form eines Computerprogramms, das für ein Steuergerät einer Brennkraftmaschine, insbesondere eines Kraftfahrzeugs, vorgesehen ist. Dabei ist das Computerprogramm insbesondere auf einem Mikroprozessor ablauffähig und zur Ausführung des erfindungsgemäßen Verfahrens geeignet. In diesem Fall wird also die Erfindung durch das Computerprogramm realisiert, so dass dieses Computerprogramm in gleicher Weise die Erfindung darstellt wie das Verfahren, zu dessen Ausführung das Computerprogramm geeignet ist. Das Computerprogramm kann auf einem elektrischen Speichermedium abgespeichert sein, beispielsweise auf einem Flash-Memory oder einem Read-Only-Memory..

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Ausführungsbeispiele der Erfindung

Figur 1    zeigt ein schematisches Blockschaltbild eines Ausführungsbeispiels einer erfindungsgemäßen Brennkraftmaschine, und

Figur 2    zeigt ein schematisches Ablaufdiagramm eines erfindungsgemäßen Verfahrens zum Starten der Brennkraftmaschine der Figur 1.

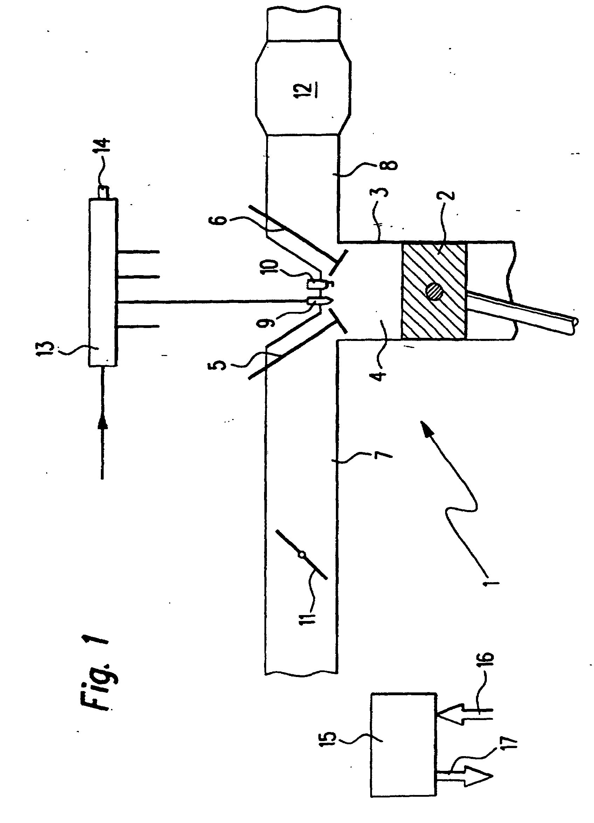

In der Figur 1 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlassventil 5 und ein Auslassventil 6 begrenzt ist. Mit dem Einlassventil 5 ist ein Ansaugrohr 7 und mit dem Auslassventil 6 ist ein Abgasrohr 8 gekoppelt.

Im Bereich des Einlassventils 5 und des Auslassventils 6 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der der Reinigung der durch die Verbrennung des Kraftstoffs entstehenden Abgase dient.

Das Einspritzventil 9 ist über eine Druckleitung mit einem Kraftstoffspeicher 13 verbunden. In entsprechender Weise sind auch die Einspritzventile der anderen Zylinder der Brennkraftmaschine 1 mit dem Kraftstoffspeicher 13 verbunden. Der Kraftstoffspeicher 13 wird über eine Zuführleitung mit Kraftstoff versorgt. Hierzu ist eine elektrische und/oder mechanische Kraftstoffpunpe vorgesehen, die dazu geeignet ist, den erwünschten Druck in dem Kraftstoffspeicher 13 aufzubauen.

Weiterhin ist an dem Kraftstoffspeicher 13 ein Drucksensor 14 angeordnet, mit dem der Druck in dem Kraftstoffspeicher 13 messbar ist. Bei diesem Druck handelt es sich um denjenigen Druck, der auf den Kraftstoff ausgeübt wird, und mit dem deshalb der Kraftstoff über das Einspritzventil 9 in den Brennraum 3 der Brennkraftmaschine 1 eingespritzt wird.

Im Betrieb der Brennkraftmaschine 1 wird Kraftstoff in den Kraftstoffspeicher 13 gefördert. Dieser Kraftstoff wird über die Einspritzventile 9 der einzelnen Zylinder 3 in die zugehörigen Brennräume 4 eingespritzt. Mit Hilfe der Zündkerzen 10 werden Verbrennungen in den Brennräumen 3 erzeugt, durch die die Kolben 2 in eine Hin- und Herbewegung versetzt werden. Diese Bewegungen werden auf eine nicht-dargestellte Kurbelwelle übertragen und üben auf diese ein Drehmoment aus.

Ein Steuergerät 15 ist von Eingangssignalen 16 beaufschlagt, die mittels Sensoren gemessene Betriebsgrößen der Brennkraftmaschine 1 darstellen. Beispielsweise ist das Steuergerät 15 mit dem Drucksensor 14, einem Luftmassensensor, einem Lambda-Sensor, einem Drehzahlsensor und dergleichen verbunden. Des Weiteren ist das Steuergerät 15 mit einem Fahrpedalsensor verbunden, der ein Signal erzeugt, das die Stellung eines von einem Fahrer betätigbaren Fahrpedals und damit das angeforderte Drehmoment angibt. Das Steuergerät 15 erzeugt Ausgangssignale 17, mit denen über Aktoren bzw. Stellern das Verhalten der Brennkraftmaschine 1 beeinflusst werden kann. Beispielsweise ist das Steuergerät 15 mit dem Einspritzventil 9, der Zündkerze 10 und der Drosselklappe 11 und dergleichen verbunden und erzeugt die zu deren Ansteuerung erforderlichen Signale.

Unter anderem ist das Steuergerät 15 dazu vorgesehen, die Betriebsgrößen der Brennkraftmaschine 1 zu steuern und/oder zu regeln. Beispielsweise wird die von dem Einspritzventil 9 in den Brennraum 4 eingespritzte Kraftstoffmasse von dem Steuergerät 15 insbesondere im Hinblick auf einen geringen Kraftstoffverbrauch und/oder eine geringe Schadstoffentwicklung gesteuert und/oder geregelt. Zu diesem Zweck ist das Steuergerät 15 mit einem Mikroprozessor versehen, der in einem Speichermedium, insbesondere in einem Flash-Memory ein Computerprogramm abgespeichert hat, das dazu geeignet ist, die genannte Steuerung und/oder Regelung durchzuführen.

Die Brennkraftmaschine 1 der Figur 1 kann in einer Mehrzahl von Betriebsarten betrieben werden. So ist es möglich, die Brennkraftmaschine 1 in einem Homogenbetrieb, einem Schichtbetrieb, einem homogenen Magerbetrieb, einem Betrieb mit Doppeleinspritzung und dergleichen zu betreiben.

Im Homogenbetrieb wird der Kraftstoff während der Ansaugphase von dem Einspritzventil 9 direkt in den Brennraum 4 der Brennkraftmaschine 1 eingespritzt. Der Kraftstoff wird dadurch bis zur Zündung noch weitgehend verwirbelt, so dass im Brennraum 4 ein im Wesentlichen homogenes Kraftstoff/Luft-Gemisch entsteht. Das zu erzeugende Moment wird dabei im Wesentlichen über die Stellung der Drosselklappe 11 von dem Steuergerät 15 eingestellt. Im Homogenbetrieb werden die Betriebsgrößen der Brennkraftmaschine 1 derart gesteuert und/oder geregelt, dass Lambda gleich oder zumindest ungefähr gleich Eins ist. Der Homogenbetrieb wird insbesondere bei Vollast angewendet.

Der homogene Magerbetrieb entspricht weitgehend dem Homogenbetrieb, es wird jedoch das Lambda auf einen Wert größer Eins eingestellt.

Im Schichtbetrieb wird der Kraftstoff während der Verdichtungsphase von dem Einspritzventil 9 direkt in den Brennraum 4 der Brennkraftmaschine 1 eingespritzt. Damit ist bei der Zündung durch die Zündkerze 10 kein homogenes Gemisch im Brennraum 4 vorhanden, sondern eine Kraftstoffschichtung. Die Drosselklappe 11 kann, abgesehen von Anforderungen z.B. der Abgasrückführung und/oder der Tankentlüftung, vollständig geöffnet und die Brennkraftmaschine 1 damit entdrosselt betrieben werden. Das zu erzeugende Moment wird im Schichtbetrieb weitgehend über die Kraftstoffmasse eingestellt. Mit dem Schichtbetrieb kann die Brennkraftmaschine 1 insbesondere im Leerlauf und bei Teillast betrieben werden.

Zwischen den genannten Betriebsarten der Brennkraftmaschine 1 kann hin- und her- bzw. umgeschaltet werden. Derartige Umschaltungen werden von dem Steuergerät 15 durchgeführt.

Wird die Brennkraftmaschine 1 z.B. nach einem längeren Stillstand gestartet, so wird insbesondere bei tiefen Temperaturen die in den Brennraum 4 eingespritzte Kraftstoffmasse wesentlich erhöht. Auf diese Weise wird nicht nur ein zündfähiges Luft/Kraftstoff-Gemisch im Brennraum 4 zur Verfügung gestellt, sondern es werden auch diejenigen Verluste an Kraftstoff ausgeglichen, die durch die Eintragung von Kraftstoff in das Motoröl und/oder durch den Aufbau eines Wandfilms aus Kraftstoff im Brennraum 4 entstehen.

Die erforderliche, einzuspritzende Kraftstoffmasse wird dabei vorab in Abhängigkeit von Betriebsgrößen der Brennkraftmaschine 1 von dem Steuergerät 15 ermittelt. In Abhängigkeit von dem Druck in dem Kraftstoffspeicher 13 wird dann aus dieser Kraftstoffmasse von dem Steuergerät 15 eine Einspritzdauer berechnet, die erforderlich ist, um die ermittelte Kraftstoffmasse über das Einspritzventil 9 in den Brennraum 4 der Brennkraftmaschine 1 einzuspritzen.

Die während des Startens erforderliche große, einzuspritzende Kraftstoffmasse hat zur Folge, dass der Druck in dem Kraftstoffspeicher 13 während der Einspritzdauer stark vermindert wird. Dies wird dadurch noch verstärkt, dass beim Starten der Brennkraftmaschine 1 die elektrische und/oder die mechanische Kraftstoffpumpe noch nicht in der Lage ist, schnell genug den erforderlichen Druck in dem Kraftstoffspeicher 13 zu erzeugen und aufrecht zu erhalten.

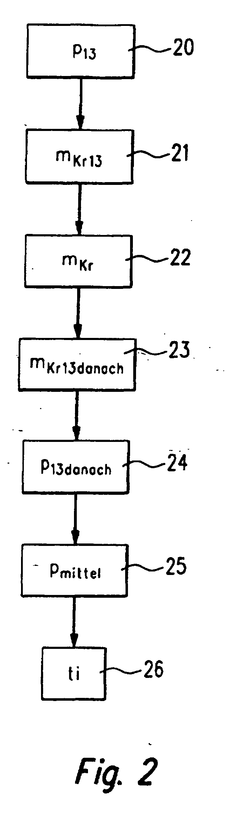

In der Figur 2 ist ein Verfahren dargestellt, mit dem von dem Steuergerät 15 diejenige Einspritzdauer in Abhängigkeit von dem einbrechenden Druck in dem Kraftstoffspeicher 13 berechnet werden kann, die erforderlich ist, um eine erwünschte Kraftstoffmasse über das Einspritzventil 9 in den Brennraum 4 der Brennkraftmaschine 1 einzuspritzen. Dieses Verfahren ist dabei besonders für den Startvorgang der Brennkraftmaschine 1 geeignet, kann aber auch während des sonstigen Betriebs derselben zur Anwendung kommen.

In einem Schritt 20 wird mit Hilfe des Drucksensors 14 der Druck im Kraftstoffspeicher 13 gemessen. Diese Messung erfolgt dabei möglichst unmittelbar vor oder unmittelbar am Anfang der nächsten Einspritzung von Kraftstoff in den Brennraum 4.

In einem Schritt 21 wird mit Hilfe der Gleichung

$$p_{13} = P_0 + E_{Kr} \times (1 - \rho_{Kr} \times (V_{13} / m_{Kr13})) \qquad (1)$$

mit

$p_{13}$      = Druck im Kraftstoffspeicher 13
$p_0$      = Umgebungsdruck
$E_{Kr}$      = Elastizitätsmodul des Kraftstoffs
$\rho_{Kr}$      = Dichte des Kraftstoffs
$V_{13}$      = Volumen des Kraftstoffspeichers 13
$m_{Kr13}$      = Kraftstoffmasse im Kraftstoffspeicher 13

aus dem gemessenen Druck im Kraftstoffspeicher 13 auf die in demselben vorhandene Kraftstoffmasse $m_{Kr13}$ geschlossen. Hierzu wird der von dem Drucksensor 14 gemessene Druck als Druck $p_{13}$ eingesetzt, um dann die Gleichung nach der Kraftstoffmasse $m_{Kr13}$ aufzulösen. Der Umgebungsdruck, das Elastizitätsmodul des Kraftstoffs, die Dichte des Kraftstoffs und das Volumen des Kraftstoffspeichers 13 sind dabei bekannt oder können anderweitig gemessen oder berechnet werden.

In einem Schritt 22 wird - wie bereits erläutert wurde - aus den Betriebsgrößen der Brennkraftmaschine 1 von dem Steuergerät 15 die einzuspritzende Kraftstoffmasse $m_{Kr}$ berechnet. Bei den Betriebsgrößen kann es sich um die Motortemperatur, die Umgebungstemperatur und dergleichen handeln.

In einem Schritt 23 wird diejenige Kraftstoffmasse $m_{Kr13danach}$ berechnet, die nach der Einspritzung der Kraftstoffmasse $m_{Kr}$ noch in dem Kraftstoffspeicher 13 vorhanden ist. Diese Berechnung erfolgt nach der Gleichung

$$m_{Kr13danach} = m_{Kr13} - m_{Kr} \qquad (2).$$

Mit Hilfe der Gleichung (1) wird nunmehr in einem Schritt 24 der Druck $p_{13danach}$ in dem Kraftstoffspeicher 13 unmittelbar am Ende oder unmittelbar nach der Einspritzung der Kraftstoffmasse $m_{Kr}$ in den Brennraum 4 ermittelt. Dabei wird als Masse im Kraftstoffspeicher 13 nicht mehr die vor der Einspritzung vorhandene Kraftstoffmasse $m_{Kr13}$, sondern die nach der Einspritzung vorhandene Kraftstoffmasse $m_{Kr13danach}$ verwendet. Die anderen Größen, also der Umgebungsdruck, das Elastizitätsmodul, udgl., sind wiederum entweder bekannt oder können anderweitig gemessen oder berechnet werden.

Aus dem Druck $p_{13}$ in dem Kraftstoffspeicher 13 vor oder am Anfang der Einspritzung und dem Druck $p_{13danach}$ am Ende oder nach der Einspritzung wird in einem Schritt 25 von dem Steuergerät 15 ein Druckmittelwert $p_{mittel}$ ermittelt. Diese Berechnung des Druckmittelwerts $p_{mittel}$ kann dabei auf der Grundlage eines linearen oder nicht-linearen Verlaufs des Druckeinbruchs während der Einspritzdauer beruhen. Ein nicht-linearer Verlauf kann dabei mit Hilfe einer Gewichtung des Drucks $p_{13}$ oder des Drucks $p_{13danach}$ erreicht werden.

In einem Schritt 26 wird die bereits ermittelte, einzuspritzende Kraftstoffmasse $m_{Kr}$ in Abhängigkeit von dem Druckmittelwert $p_{mittel}$ in die zugehörige Einspritzdauer ti umgerechnet. Mit dieser Einspritzdauer ti wird dann das Einspritzventil 9 von dem Steuergerät 15 angesteuert und geöffnet, so dass während dieser Einspritzdauer ti der Kraftstoff aus dem Kraftstoffspeicher 13 in den Brennraum 4 der Brennkraftmaschine 1 eingespritzt wird.

Nach dem Startvorgang, also beispielsweise nach Erreichen der Leerlaufdrehzahl der Brennkraftmaschine 1, ist es möglich, dass das Verfahren nach der Figur 2 nicht mehr durchgeführt werden muss. In diesem normalen Betrieb der Brennkraftmaschine 1 kann es ausreichend sein, den Druck in dem Druckspeicher 13 mit Hilfe des Drucksensors 14 immer wieder zu messen und daraus einen Druckmittelwert für die Umrechnung der einzuspritzenden Kraftstoffmasse in die zugehörige Einspritzdauer zu berechnen.

**Patentansprüche**

1. Verfahren zum Starten einer Brennkraftmaschine (1) insbesondere eines Kraftfahrzeugs, bei dem Kraftstoff während einer Einspritzdauer (ti) aus einem Kraftstoffspeicher (13) direkt in einen Brennraum (4) eingespritzt wird, und bei dem die Einspritzdauer (ti) in Abhängigkeit von dem auf den Kraftstoff einwirkenden Druck ermittelt wird, wobei der vor oder am Anfang der Einspritzung auf den Kraftstoff einwirkende Druck ($p_{13}$) von einem Drucksensor (14) gemessen wird, und wobei der am Ende oder nach der Einspritzung auf den Kraftstoff einwirkende Druck ($P_{13danach}$) ermittelt wird, **dadurch gekennzeichnet, dass** der am Ende oder nach der Einspritzung auf den Kraftstoff einwirkende Druck ($p_{13danach}$) über die Ermittlung von im Kraftstoffspeicher (13) vorhandenen Kraftstoffmassen aus dem vor oder am Anfang der Einspritzung auf den Kraftstoff einwirkenden Druck ($p_{13}$) berechnet wird, und dass die Einspritzdauer (ti) in Abhängigkeit von diesen beiden Drücken ($p_{13}$, $p_{13danach}$) ermittelt wird.

2. Verfahren nach Anspruch 1, **dadurch gekennzeichnet, dass** aus dem vor oder am Anfang der Einspritzung auf den Kraftstoff einwirkenden Druck ($_{P13}$) eine vor der Einspritzung in dem Kraftstoffspeicher (13) vorhandene Kraftstoffmasse ($m_{Kr13}$) ermittelt wird.

3. Verfahren nach einem der Ansprüche 1 oder 2, **dadurch gekennzeichnet, dass** eine einzuspritzende Kraftstoffmasse ($m_{Kr}$) aus Betriebsgrößen der Brennkraftmaschine (1) ermittelt wird.

4. Verfahren nach den Ansprüchen 2 und 3, **dadurch gekennzeichnet, dass** aus der vor der Einspritzung in dem Kraftstoffspeicher (13) vorhandenen Kraftstoffmasse ($m_{Kr13}$) und aus der einzuspritzenden Kraftstoffmasse ($m_{Kr}$) eine nach der Einspritzung in dem Kraftstoffspeicher (13) vorhandene Kraftstoffmasse ($m_{Kr13danach}$) ermittelt wird.

5. Verfahren nach Anspruch 4, **dadurch gekennzeichnet, dass** aus der nach der Einspritzung in dem Kraftstoffspeicher (13) vorhandenen Kraftstoffmasse ($m_{Kr13danach}$) der am Ende oder nach der Einspritzung auf den Kraftstoff einwirkende Druck ($P_{13danach}$) ermittelt wird.

6. Verfahren nach einem der Ansprüche 1 bis 5, **dadurch gekennzeichnet, dass** aus dem vor oder am Anfang der Einspritzung auf den Kraftstoff einwirkenden Druck ($p_{13}$) und aus dem am Ende oder nach der Einspritzung auf den Kraftstoff einwirkenden Druck ($P_{13danach}$) ein Druckmittelwert ($P_{mittel}$) ermittelt wird.

**7.** Verfahren nach Anspruch 6, **dadurch gekennzeichnet, dass** die Einspritzdauer (ti) aus dem Druckmittelwert ($P_{mittel}$) ermittelt wird.

**8.** Computerprogramm , **dadurch gekennzeichnet, dass** es zur Anwendung in einem Verfahren nach einem der vorhergehenden Ansprüche programmiert ist.

**9.** Elektrisches Speichermedium für ein Steuergerät (15) einer Brennkraftmaschine (1), **dadurch gekennzeichnet, dass** auf ihm ein Computerprogramm zur Anwendung in einem Verfahren der Ansprüche 1 bis 7 abgespeichert ist.

**10.** Steuergerät (15) für eine Brennkraftmaschine (1), **dadurch gekennzeichnet, dass** es zur Anwendung in einem Verfahren nach einem der Ansprüche 1 bis 7 hergerichtet ist.

## Claims

**1.** Method for starting an internal combustion engine (1), in particular of a motor vehicle, in which during an injection duration (ti) fuel is injected directly from a fuel reservoir (13) into a combustion chamber (4), and in which the injection duration (ti) is determined as a function of the pressure acting on the fuel, the pressure ($p_{13}$) which acts on the fuel before or at the start of the injection being measured by a pressure sensor (14), and the pressure ($p_{13after}$) acting on the fuel at the end of or after the injection being determined, **characterized in that** the pressure ($p_{13after}$) acting on the fuel at the end of or after the injection is calculated by determining fuel masses present in the fuel reservoir (13) from the pressure ($p_{13}$) acting on the fuel before or at the start of the injection, and **in that** the injection duration (ti) is determined as a function of these two pressures ($p_{13}$, $p_{13after}$).

**2.** Method according to Claim 1, **characterized in that** a fuel mass ($m_{Kr13}$) which is present in the fuel reservoir (13) before the injection is determined from the pressure ($p_{13}$) acting on the fuel before or at the start of the injection.

**3.** Method according to Claim 1 or 2, **characterized in that** a fuel mass ($m_{Kr}$) which is to be injected is determined from operating variables of the internal combustion engine (1).

**4.** Method according to Claims 2 and 3, **characterized in that** a fuel mass ($m_{Kr13after}$) which is present in the fuel reservoir (13) after the injection is determined from the fuel mass ($m_{Kr13}$) which is present in the fuel reservoir (13) before the injection and from the fuel mass ($m_{Kr}$) to be injected.

**5.** Method according to Claim 4, **characterized in that** the pressure ($p_{13after}$) acting on the fuel at the end of or after the injection is determined from the fuel mass ($m_{Kr13after}$) which is present in the fuel reservoir (13) after the injection.

**6.** Method according to one of Claims 1 to 5, **characterized in that** a mean pressure value ($P_{mean}$) is determined from the pressure ($p_{13}$) acting on the fuel before or at the start of the injection and from the pressure ($P_{13after}$) acting on the fuel at the end of or after the injection.

**7.** Method according to Claim 6, **characterized in that** the injection duration (ti) is determined from the mean pressure value ($P_{mean}$).

**8.** Computer program, **characterized in that** it is programmed for use in a method according to one of the preceding claims.

**9.** Electrical storage medium for a control unit (15) of an internal combustion engine (1), **characterized in that** a computer program for use in a method according to Claims 1 to 7 is stored on it.

**10.** Control unit (15) for an internal combustion engine (1), **characterized in that** it is designed for use in a method according to one of Claims 1 to 7.

## Revendications

**1.** Procédé pour démarrer un moteur à combustion interne (1), notamment d'un véhicule automobile, dans lequel du carburant provenant d'une rampe de carburant (13) est injecté directement dans une chambre de combustion (4) pendant un temps d'injection (ti) qui est déterminé en fonction de la pression agissant sur le carburant, avec mesure par un capteur de pression (14) de la valeur ($p_{13}$) de cette pression avant ou au début de l'injection de carburant et détermination de la pression ($p_{13danach}$) agissant sur le carburant à la fin ou après l'injection, **caractérisé en ce que** la pression (p13danach) agissant sur le carburant à la fin ou après l'injection est calculée en déterminant les masses de carburant présentes dans le réservoir (13) à partir de la pression ($p_{13}$) agissant sur le carburant avant ou au début de l'injection, le temps d'injection (ti) étant déterminé en fonction de ces deux pressions ($p_{13}$, $p_{13danach}$).

**2.** Procédé selon la revendication 1, **caractérisé en ce que** la masse de carburant ($m_{Kr13}$) existant dans la rampe de carburant (13) avant l'injection est déterminée à partir de la pression ($p_{13}$) agissant sur le carburant avant ou au début de l'injection.

3. Procédé selon la revendication 1 ou 2,
   **caractérisé en ce qu'**
   une masse de carburant à injecter ($m_{Kr}$) est établie à partir des paramètres de fonctionnement du moteur à combustion interne (1).

4. Procédé selon les revendications 2 et 3,
   **caractérisé en ce que**
   la quantité de carburant ($m_{Kr13danach}$) existant dans la rampe de carburant (13) après l'injection est déterminée à partir de la masse de carburant ($m_{Kr13}$) existant dans la rampe de carburant (13) avant l'injection, et de la masse de carburant ($m_{Kr}$) à injecter.

5. Procédé selon la revendication 4,
   **caractérisé en ce que**
   la pression ($p_{13danach}$) agissant sur le carburant à la fin ou après l'injection est déterminée à partir de la masse de carburant ($m_{Kr13danach}$) existant dans la rampe de carburant (13) après l'injection.

6. Procédé selon une des revendications 1 à 5,
   **caractérisé en ce qu'**
   une valeur moyenne de pression ($P_{mittel}$) est déterminée à partir de la pression ($p_{13}$) agissant sur le carburant avant ou au début de l'injection et à partir de la pression agissant sur le carburant à la fin ou après l'injection.

7. Procédé selon la revendication 6,
   **caractérisé en ce que**
   le temps d'injection (ti) est déterminé à partir de la valeur moyenne de pression ($P_{mittel}$).

8. Programme d'ordinateur,
   **caractérisé en ce qu'**
   il est programmé pour application d'un procédé selon l'une des revendications précédentes.

9. Mémoire électronique pour un appareil de commande (15) d'un moteur à combustion interne (1),
   **caractérisé en ce qu'**
   elle contient un programme d'ordinateur appliquant un procédé selon l'une des revendications 1 à 7.

10. Appareil de commande (15) pour un moteur à combustion interne (1),
    **caractérisé en ce qu'**
    il est conçu pour appliquer un procédé selon l'une des revendications 1 à 7.

Fig. 1

$$p_{13} \quad \boxed{\phantom{xx}} \quad 20$$

$$m_{Kr13} \quad \boxed{\phantom{xx}} \quad 21$$

$$m_{Kr} \quad \boxed{\phantom{xx}} \quad 22$$

$$m_{Kr13danach} \quad \boxed{\phantom{xx}} \quad 23$$

$$p_{13danach} \quad \boxed{\phantom{xx}} \quad 24$$

$$p_{mittel} \quad \boxed{\phantom{xx}} \quad 25$$

$$ti \quad \boxed{\phantom{xx}} \quad 26$$

*Fig. 2*